# EUROPÄISCHE PATENTSCHRIFT

(11) **EP 2 343 229 B1**
(45) Veröffentlichungstag und Bekanntmachung des Hinweises auf die Patenterteilung: **07.03.2018**
(21) Anmeldenummer: 11150205.0
(22) Anmeldetag: 05.01.2011
(51) Int. Cl.: B62D 7/15, B62D 13/06

(54) **Lenkachse**
Steering axle
Essieu directeur

(30) Priorität: 06.01.2010 DE 102010000012
(43) Veröffentlichungstag der Anmeldung: 13.07.2011
(73) Patentinhaber: BPW-Hungária Kft., 9700 Szombathely (HU)
(72) Erfinder: Vozár, János, 9700 Szombathely (HU)
(74) Vertreter: Christophersen, Ulrich Rudolf

(56) Entgegenhaltungen:
- EP-A2- 1 529 717
- WO-A1-2006/061590
- DE-A1- 2 253 956
- DE-A1- 3 918 986
- NL-C2- 1 011 893

## Beschreibung

Die Erfindung betrifft eine Lenkachse mit im Bereich der beiden Enden eines Achskörpers schwenkbeweglich gelagerten Lenkschenkeln mit jeweils einem Radträger für ein Fahrzeugrad, mit einem die Lenkschenkel gelenkig verbindenden, ein- oder mehrteiligen Zug- und Druckgestänge sowie einem gegenüber dem Achskörper zumindest in Längsrichtung festgelegten Hydraulikzylinder zur Betätigung des Zug- und Druckgestänges, der für die Versorgung mit hydraulischem Druck an seinem Zylindergehäuse sowie an seinen Endkappen mit Druckanschlüssen versehen ist, wobei der Innenraum des Hydraulikzylinders einen Längsabschnitt des Zug- und Druckgestänges aufnimmt, der sich aus einem den Innenraum in zwei Druckräume unterteilenden Kolben mit zu beiden Seiten aus dem Hydraulikzylinder herausführenden Kolbenstangen zusammensetzt. Lenkachsen mit diesen Merkmalen sind aus der gattungsgemässen DE 39 18 986 A1 und der DE 2 253 956 A bekannt. Zur Einstellung der Räder auf Links- oder Rechtsfahrt sind bei der Zwangslenkachse aus der DE 2 253 956 A die Lenkschenkel der Lenkachse über ein Zug- und Duckgestänge miteinander verbunden, wobei ein Längsabschnitt des Zug- und Druckgestänges durch einen zentral angeordneten Hydraulikzylinder hindurchführt. Dieser weist ein Zylindergehäuse mit zwei Endkappen auf, wodurch zwei durch den Kolben des Hydraulikzylinders getrennte Druckräume geschaffen werden. Über schaltbare Ventilsteuerungen lassen sich die beiden Druckräume wechselseitig mit hydraulischem Druck beaufschlagen, um so die Räder des Fahrzeuges entsprechend den Steuerbefehlen zu lenken.

Die Lenkachse nach der DE 2 253 956 A kommt als Vorderachse bei Traktoren oder anderen landwirtschaftlichen Fahrzeugen zum Einsatz. Kommt eine solche Lenkachse hingegen als Anhängerachse und insbesondere Nachlauflenkachse zum Einsatz, sind besondere Maßnahmen für die Rückwärtsfahrt zu treffen. Denn entweder erfolgt während der Rückwärtsfahrt eine Zwangslenkung durch entsprechende hydraulische Druckbeaufschlagung der beiden Druckräume des Hydraulikzylinders, oder aber es muss, falls ein Lenken während der Rückwärtsfahrt nicht gewünscht ist, eine Mittelposition des Zug- und Druckgestänges herbeigeführt werden. Dies lässt sich erreichen, indem die beiden gleich dimensionierten Druckräume des Hydraulikzylinders mit demselben Druckmittelvolumen befüllt werden, und so der Kolben eine mittige Stellung in dem Hydraulikzylinder einnimmt. Die hierfür erforderliche Steuerung ist jedoch aufwendig, da sie nicht auf Drücken aufbaut, sondern auf einem Volumen und damit Volumenströmen.

Lenkachsen mit Hydraulikzylindern, welche eine einseitig durch das Zylindergehäuse hindurchgeführte Kolbenstange eines Zug- und Druckgestänges beinhalten, sind aus der WO 2006/061590 A1 und der NL 1 011 893 C bekannt. So zeigt die WO 2006/061590 A1 einen Servolenkmechanismus für eine Fahrzeug- oder Anhängerachse mit einem Hydraulikzylinder, in welchen eine Kolbenstange von einer Seite hineinragt. Der Hydraulikzylinder ist mit einem an der Stange festgelegten Kolben und weiteren beweglichen Kolben versehen. Die andere Seite des Hydraulikzylinders ist geschlossen und mit einem Gewindeabschnitt versehen, der fahrzeugseitig befestigt werden kann. Auch die NL 1 011 893 C zeigt einen zu einer Seite hin offenen Hydraulikzylinder. Durch die Öffnung ragt eine als Kolbenstange fungierende Stange des Lenkschenkels. Die Befestigung des Hydraulikzylinders an seinem anderen Ende ist über eine Verbindung zu dessen Gehäuse vollzogen.

Der Erfindung liegt daher die Aufgabe zugrunde, eine sowohl zum Einsatz als Zwangslenkachse als auch als Nachlauflenkachse mit Rückfahrsperre geeignete Lenkachse zu schaffen, bei der die Sperrung bei Rückwärtsfahrt mit technisch einfachen Mitteln unter Meidung eines erhöhten steuerungstechnischen Aufwandes erreicht wird.

Zur Lösung dieser Aufgabe wird eine Lenkachse mit den Merkmalen des Patentanspruchs 1 vorgeschlagen.

Diese technische Lösung beruht auf dem Gedanken, die Axialbeweglichkeit des Zug- und Druckgestänges innerhalb des Hydraulikzylinders einseitig mechanisch zu begrenzen, wodurch es zu einer Blockade und damit Sperrung zumindest in die eine Bewegungsrichtung kommt. Eine Blockade oder Sperrung auch in die andere Bewegungsrichtung lässt sich mit relativ einfachen technischen Mitteln bewerkstelligen. Zum Beispiel kann der Druckraum auf der dem Anschlagelement abgewandten Seite des Kolbens geflutet, und so der Kolben bis an den mechanischen Anschlag herangefahren werden. Ist dies geschehen, so ist der Kolben und damit auch das Zug- und Druckgestänge in beide Richtungen arretiert und die Lenkachse für die Rückwärtsfahrt in ihrer Mittelstellung gesperrt.

Verschiedene Ausgestaltungen der Lenkachse sind in den Unteransprüchen angegeben.

Weitere Vorteile und Einzelheiten ergeben sich aus der nachfolgenden Beschreibung eines Ausführungsbeispieles der Erfindung, wobei auf die Zeichnungen Bezug genommen wird. Darin zeigen:
- Fig. 1: den Hydraulikzylinder einer Fahrzeug-Lenkachse einschließlich eines Teils des zu den Lenkschenkeln der Lenkachse führenden Zug- und Druckgestänges;
- Fign. 2a und 2b: Funktionsdarstellungen zur Arbeitsweise des Hydraulikzylinders im Fall der Zwangslenkung und
- Fign. 3a und 3b: Funktionsdarstellungen zur Arbeitsweise des Hydraulikzylinders im Fall der Nachlauflenkung bei Rückwärtsfahrt.

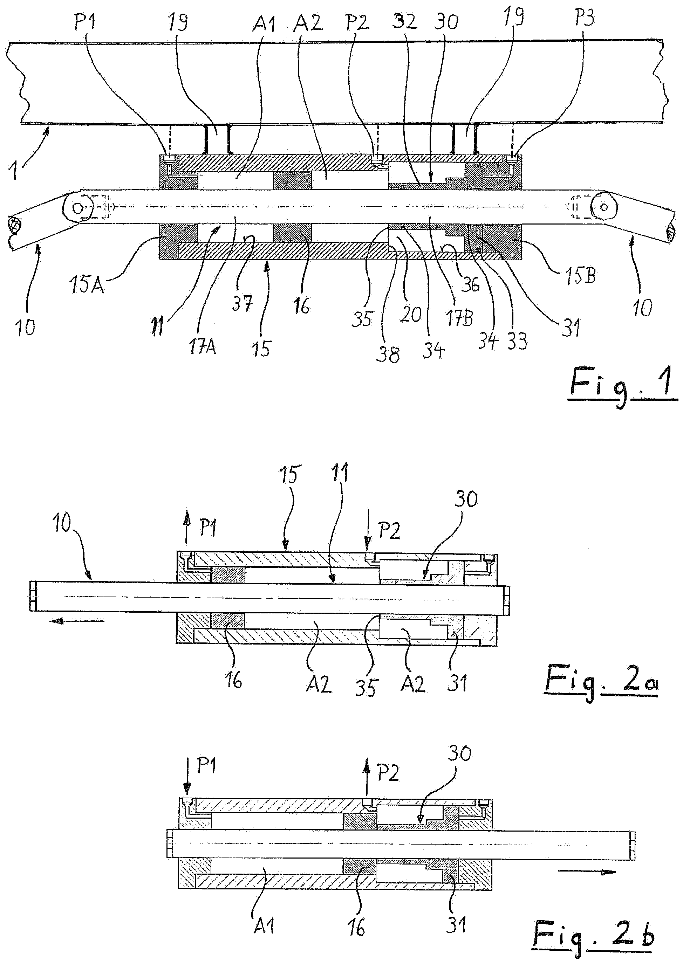

Die Fig. 1 zeigt den mittleren Längsabschnitt eines Achskörpers 1 einer Lenkachse, vorzugsweise der Lenkachse eines Fahrzeuganhängers. Im Bereich jedes der beiden nicht dargestellten Enden des Achskörpers 1 ist jeweils ein Lenkschenkel auf einem Achsschenkelbolzen schwenkbar gelagert. Bestandteil jedes Lenkschenkels ist ein Radträger, auf dem sich die Radnabe des jeweiligen Fahrzeugrades dreht. Zum Verschwenken der Lenkschenkel und damit zum aktiven Einlenken der Fahrzeugräder sind die Lenkschenkel über ein hier mehrteiliges Zug- und Druckgestänge 10 miteinander verbunden. Dessen Verbindungspunkte zu den Lenkschenkeln sind jeweils als Schwenkgelenke gestaltet. Ferner weist auch das Zug- und Druckgestänge 10 selbst entlang seiner Längserstreckung zusätzliche Schwenkgelenke 12 auf. Diese können kardanisch sein oder Kugelgelenke aufweisen. Auf diese Weise lässt sich die Lenkgeometrie hinsichtlich eines Höhenausgleichs kompensieren.

Ein mittlerer Längsabschnitt 11 des Zug- und Druckgestänges 10 führt durch den Innenraum 20 eines Hydraulikzylinders 15 hindurch. Der mittlere Längsabschnitt 11 besteht aus einer durch zwei Kolbenstangenabschnitte 17A, 17B gebildeten, glatten Stange von zylindrischem Querschnitt, und einem darauf befestigten Kolben 16, der den Innenraum 20 in einen ersten Druckraum A1 und einen zweiten Druckraum A2 unterteilt. An seinen Enden ist der Hydraulikzylinder 15 durch Endkappen 15A, 15B druckdicht verschlossen, durch die die Kolbenstangenabschnitte 17A, 17B abgedichtet hindurchführen.

Der Hydraulikzylinder 15 ist über Verbindungsteile 19 am Achskörper 1 befestigt, und so zumindest in Zylinderlängsrichtung fahrzeugfest angeordnet.

Für die Versorgung mit hydraulischem Druck ist der Hydraulikzylinder 15 an seinem Zylindergehäuse sowie an seinen Endkappen 15A, 15B mit insgesamt drei Druckanschlüssen versehen.

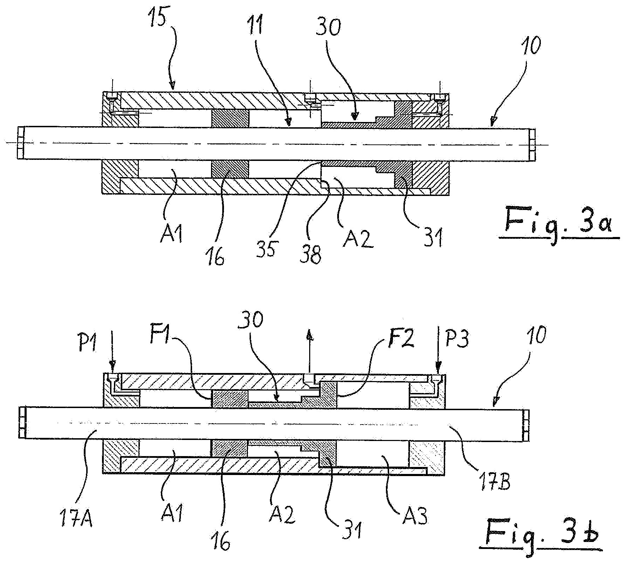

Ein erster Druckanschluss P1 führt, hier durch die Endkappe 15A hindurch, in den ersten Druckraum A1. Ein zweiter Druckanschluss P2 führt in den zweiten Druckraum A2. Ein dritter Druckanschluss P3 führt, hier durch die andere Endkappe 15B hindurch, in einen dritten Druckraum A3 (Fig. 3b), der sich in dem am weitesten von dem ersten Druckraum A1 entfernten Teil des Innenraums 20 befindet.

Die Druckanschlüsse P1, P2, P3 sind über schaltbare Hydraulikventile gesteuert an eine hydraulische Druckquelle anschließbar, um so über den Kolben 16 das Zug- und Druckgestänge 10 in die eine oder in die andere Längsrichtung zu bewegen, was im Einzelnen noch anhand der Figuren 2a bis 3b erläutert werden wird.

Der Innenraum 20 des Hydraulikzylinders 15 nimmt neben dem fest auf dem Zug- und Druckgestänge 10 sitzenden Kolben 16 noch einen weiteren Kolben 31 auf. Der weitere Kolben 31 ist Bestandteil eines Anschlagelements 30, welches außen gegenüber der entsprechenden Innenwandung 36 des Hydraulikzylinders, und innen gegenüber der durch den Druckraum A2 hindurchführenden Kolbenstange 17B abgedichtet ist. Hierzu ist das Anschlagelement 30 mit Dichtungen 33, 34 versehen. Im Übrigen ist das Anschlagelement 30 sowohl gegenüber dem Hydraulikzylinder, als auch gegenüber der Kolbenstange 17B axial frei beweglich.

Das Anschlagelement 30 setzt sich aus dem gegen die Innenwandung 36 abgedichteten Kolben 31 sowie einem Stempel 32 zusammen, welcher sich von dem Kolben 31 in Richtung zu dem anderen Kolben 16 hin erstreckt und in einem Anschlag 35 endet. Der Stempel 32 des Anschlagelements 30 ist mit einer zentralen Bohrung versehen, und dient so der Führung des Anschlagelements 30 auf der Kolbenstange 17B. Der Stempel 32 ist von solch geringer Querschnittsfläche, dass er den freien Fluidfluß längs des zweiten Druckraums A2 nicht behindert.

Die Größe der beiden Kolben 16, 31 ist unterschiedlich. Dies wird bei gleichbleibendem Durchmesser der Kolbenstangenabschnitte 17A, 17B erreicht, indem die Innenwandung 36 auf den Bewegungsabschnitt des weiteren Kolbens 31 einen größeren Durchmesser aufweist, als die Innenwandung 37 auf dem Bewegungsabschnitt des mit der Zug- und Druckstange 10 verbundenen Kolbens 16. Diese Gestaltung der Zylinderinnenwandung unter Ausbildung einer Stufe 38 oder eines Absatzes am Übergang zwischen der größeren Innenwandung 36 und der im Vergleich kleineren Innenwandung 37 führt dazu, dass, wie in Fig. 3b wiedergegeben, die hydraulisch wirksame Fläche F1 am Kolben 16 geringer ist, als die hydraulisch wirksame Fläche F2 am weiteren Kolben 31.

In den Fign. 2a und 2b ist die Arbeitsweise des Hydraulikzylinders im Fall der Zwangslenkung der Lenkachse wiedergegeben. Wird der Druckanschluss P2 durch eine entsprechende Ventilschaltung mit der Hydraulikquelle wirkverbunden, und zugleich der Druckanschluss P1 entlastet, kommt es zu einem Druckaufbau im Druckraum A2 und der Kolben 16 einschließlich der Zug- und Druckstange 10 wird nach links bewegt. Umgekehrt wird, wenn der Druckanschluss P1 ventilgesteuert mit der Hydraulikquelle wirkverbunden und zugleich der Druckanschluss P2 entlüftet wird, durch den sich dabei einstellenden Druckaufbau im Druckraum A1 der Kolben 16 mit der Zug- und Druckstange 10 nach rechts bewegt. Diese Bewegung ist spätestens dann beendet, wenn der Kolben 16 axial an das Anschlagelement 30 anstößt. Der Linkssteuerung (Fig. 2a) bzw. Rechtssteuerung (Fig. 2b) steht nicht entgegen, dass das Volumen des Druckraums A2 größer als das Volumen des Druckraums A1 ist.

In den Fign. 3a und 3b ist die Arbeitsweise des Hydraulikzylinders zur Aktivierung der Rückfahrsperre dargestellt. Durch eine entsprechende Ventilschaltung werden die beiden Druckanschlüsse P1, P3 mit der Druckquelle der Hydraulik verbunden, und zugleich der in den Druckraum A2 führende Druckanschluss P2 entlüftet. Es kommt auf diese Weise zum Befüllen des Druckraums A1 und des Druckraums A3 mit Hydraulikfluid. Wegen der Verbindung mit derselben Hydraulikquelle ist auch der sich einstellende Druck in beiden Druckräumen A1, A3 derselbe. Da jedoch die Druckfläche F2 am Kolben 31 größer als die Druckfläche F1 ist, verlagert sich das Anschlagelement 30 nach links in Fig. 3b, bis es durch axiales Anliegen an der Stufe 38 der Zylinderinnenwandung seine zweite Endstellung erreicht. Die erste Endstellung des Anschlagelements 30, in der sich dieses an der Endkappe 15B abstützt, ist in Fig. 3a wiedergegeben.

In der zweiten Endstellung des Anschlagelements 30 gemäß Fig. 3b bildet die Stirnfläche des Stempels 32 einen Anschlag 35, der die Beweglichkeit des Kolbens 16 einseitig, d. h. in die eine Richtung, mechanisch blockiert. Zugleich bewirkt der auf die Druckfläche F1 des Kolbens 16 wirkende Druck im Druckraum A1, dass der an dem Anschlagelement 30 abgestützte Kolben 16 diese axiale Position auch in die andere Richtung nicht verlassen kann. Der Kolben 16 und damit auch das Zug- und Druckgestänge ist daher in beide Richtungen gesperrt und verharrt in einer Neutralposition, in der die Fahrzeugräder genau in Fahrzeuglängsrichtung ausgerichtet sind.

Nach Beendigung der Rückwärtsfahrt reicht es zum Aufheben der Lenksperre aus, den Druckanschluss P3 zu entlüften, wodurch sich der dritte Druckraum A3 leert und das Anschlagelement 30 wieder in seine in Fig. 3a wiedergegebene erste Endstellung zurückkehrt.

Die Längsposition der Blockierstellung ergibt sich aus der Länge der beteiligten Bauteile. Einfluss hierauf hat die Länge des aus dem Kolben 31 und dem Stempel 32 bestehenden Anschlagelements 30 sowie die Lage der Stufe 38 in Bezug auf die Länge der Zylinderinnenwandung 36, 37. Wegen der von den Rädern in das System übertragenen Seitenkräfte kann es notwendig werden, die Blockierstellung durch ventilgesteuerte Absperrung der Druckräume A1 und A3 zusätzlich zu sichern. Die Absperrung erfolgt nach Erkennen der Blockierstellung, etwa durch Einsatz eines elektrischen Kontakts, oder durch eine Zeitsteuerung.

Mit einem einzigen Hydraulikzylinder 15 und nur drei Druckanschlüssen P1, P2, P3 lässt sich daher sowohl die Funktion einer Zwangslenkachse, als auch eine Lenksperre bei Rückwärtsfahrt realisieren. Zur einfachen Bauart trägt ferner bei, dass alle beteiligten Druckanschlüsse P1, P2, P3 auf demselben Druckniveau arbeiten. Zur Aktivierung der Lenksperre ist lediglich eine Ventilschaltung erforderlich, hingegen weder eine Steuerung oder Regelung der Höhe des Fluiddrucks, noch eine Regelung des Befüllvolumens der einzelnen Druckräume des Hydraulikzylinders.

### Bezugszeichenliste

- 1: Achskörper
- 10: Zug- und Druckgestänge
- 11: Längsabschnitt
- 12: Schwenkgelenk
- 15: Hydraulikzylinder
- 15A: Endklappe
- 15B: Endklappe
- 16: Kolben
- 17A: Kolbenstange
- 17B: Kolbenstange
- 19: Verbindungsteile
- 20: Innenraum
- 30: Anschlagelement
- 31: Kolben
- 32: Stempel
- 33: Dichtung
- 34: Dichtung
- 35: Anschlag
- 36: Innenwandung
- 37: Innenwandung
- 38: Stufe

- A1: Druckraum
- A2: Druckraum
- A3: Druckraum
- F1: Druckfläche
- F2: Druckfläche
- P1: Druckanschluss
- P2: Druckanschluss
- P3: Druckanschluss

## Patentansprüche

1. Lenkachse mit im Bereich der beiden Enden eines Achskörpers (1) schwenkbeweglich gelagerten Lenkschenkeln mit jeweils einem Radträger für ein Fahrzeugrad, mit einem die Lenkschenkel gelenkig verbindenden, ein- oder mehrteiligen Zug- und Druckgestänge (10) sowie einem gegenüber dem Achskörper (1) zumindest in Längsrichtung festgelegten Hydraulikzylinder (15) zur Betätigung des Zug- und Druckgestänges (10), der für die Versorgung mit hydraulischem Druck an seinem Zylindergehäuse sowie an seinen Endkappen (15A, 15B) mit Druckanschlüssen versehen ist, wobei der Innenraum (20) des Hydraulikzylinders (15) einen Längsabschnitt (11) des Zug- und Druckgestänges aufnimmt, der sich aus einem den Innenraum (20) in zwei Druckräume (A1, A2) unterteilenden Kolben (16) mit zu beiden Seiten aus dem Hydraulikzylinder (15) herausführenden Kolbenstangen (17A, 17B) zusammensetzt, **dadurch gekennzeichnet, dass** der Hydraulikzylinder (15) mit insgesamt drei Druckanschlüssen versehen ist, wobei ein erster Druckanschluss (P1) durch eine erste der Endkappen (15A) hindurch in den ersten Druckraum (A1), ein zweiter Druckanschluss (P2) in den zweiten Druckraum (A2) und ein dritter Druckanschluss (P3) durch die andere der Endkappen (15B) hindurch in einen dritten Druckraum (A3) führt, der sich in dem am weitesten von dem ersten Druckraum (A1) entfernten Teil des Innenraums (20) befindet, und wobei in dem Innenraum (20) ein zwischen zwei Endstellungen längsbewegliches Anschlagelement (30) angeordnet ist, welches in seiner einen Endstellung den Längsabschnitt (11) des Zug- und Druckgestänges (10) einseitig in einer Stellung blockiert, in der das Zug- und Druckgestänge (10) eine neutrale Mittelstellung einnimmt, und weiter **dadurch gekennzeichnet, dass** sich das Anschlagelement (30) in seiner anderen Endstellung an der Endkappe (15B) des Hydraulikzylinders (15) abstützt, durch die eine der beiden Kolbenstangen (17B) hindurchgeführt ist, dass Bestandteil des Anschlagelements (30) ein gegenüber der Innenwandung (36) des Hydraulikzylinders und der durch den Druckraum hindurchführenden Kolbenstange (17B) beweglicher und gegenüber diesen Teilen (36, 17B) abgedichteter, weiterer Kolben (31) ist und dass die hydraulisch wirksame Fläche (F1) des Kolbens (16) geringer als die hydraulisch wirksame Fläche (F2) des weiteren Kolbens (31) ist.

2. Lenkachse nach Anspruch 1, **dadurch gekennzeichnet, dass** das Anschlagelement (30) längsbeweglich in dem Innenraum (20) des Hydraulikzylinders angeordnet ist.

3. Lenkachse nach Anspruch 1, **dadurch gekennzeichnet, dass** die Innenwandung (36, 37) des Hydraulikzylinders (15) im Bewegungsbereich des weiteren Kolbens (31) einen größeren Durchmesser aufweist, als im Bewegungsbereich des Kolbens (16).

4. Lenkachse nach einem der vorangehenden Ansprüche, **dadurch gekennzeichnet, dass** Bestandteil des Anschlagelements (30) ein die Kolbenstange (17B) umgebender Stempel (32) ist, dessen Stirnfläche einen Anschlag (35) bildet.

5. Lenkachse nach Anspruch 4, **dadurch gekennzeichnet, dass** der Durchmesser des Stempels (32) gering ist im Vergleich zum Durchmesser der Innenwandung (36, 37).

6. Lenkachse nach einem der vorangehenden Ansprüche, **dadurch gekennzeichnet, dass** der Hydraulikzylinder (15) an seiner Innenwandung (36, 37) mit einer Stufe (38) oder einem Absatz versehen ist, an der bzw. dem das Anschlagelement (30) in seiner einen Endstellung zur Anlage kommt.

7. Lenkachse nach einem der vorangehenden Ansprüche, **dadurch gekennzeichnet, dass** der weitere Kolben (31) auf seiner dem Kolben (16) abgewandten Seite einen Druckraum (A3) begrenzt, der mit einer hydraulischen Druckquelle verbindbar ist.

## Claims

1. Steering axle having steering arms which are mounted in a pivotably movable manner in the region of the two ends of an axle beam (1), with in each case one wheel support for a vehicle wheel, having a single-piece or multiple-piece push/pull linkage (10) which connects the steering arms in an articulated manner, and a hydraulic cylinder (15) which is fixed at least in the longitudinal direction with respect to the axle beam (1) for actuating the push/pull linkage (10), which hydraulic cylinder (15) is provided with pressure connectors on its cylinder housing and on its end caps (15A, 15B) for the supply with hydraulic pressure, the interior space (20) of the hydraulic cylinder (15) receiving a longitudinal section (11) of the push/pull linkage, which longitudinal section (11) is composed of a piston (16) which divides the interior space (20) into two pressure spaces (A1, A2) with piston rods (17A, 17B) which lead out of the hydraulic cylinder (15) on both sides, **characterized in that** the hydraulic cylinder (15) is provided with a total of three pressure connectors, a first pressure connector (P1) leading through a first one of the end caps (15A) into the first pressure space (A1), a second pressure connector (P2) leading into the second pressure space (A2), and a third pressure connector (P3) leading through the other one of the end caps (15B) into a third pressure space (A3) which is situated **in that** part of the interior space (20) which is furthest away from the first pressure space (A1), and a stop element (30) which can be moved longitudinally between two end positions being arranged in the interior space (20), which stop element (30), in its one end position, blocks the longitudinal section (11) of the push/pull linkage (10) on one side in a position, in which the push/pull linkage (10) assumes a neutral central position, and further **characterized in that**, in its other end position, the stop element (30) is supported on the end cap (15B) of the hydraulic cylinder (15), through which end cap (15B) one of the two piston rods (17B) is led through, **in that** a constituent part of the stop element (30) is a further piston (31) which can be moved with respect to the inner wall (36) of the hydraulic cylinder and the piston rod (17B) which leads through the pressure space, which further piston (31) is sealed with respect to the said parts (36, 17B), and **in that** the hydraulically active area (F1) of the piston (16) is smaller than the hydraulically active area (F2) of the further piston (31).

2. Steering axle according to Claim 1, **characterized in that** the stop element (30) is arranged such that it can be moved longitudinally in the interior space (20) of the hydraulic cylinder.

3. Steering axle according to Claim 1, **characterized in that** the inner wall (36, 37) of the hydraulic cylinder (15) has a greater diameter in the movement region of the further piston (31) than in the movement region of the piston (16).

4. Steering axle according to one of the preceding claims, **characterized in that** a constituent part of the stop element (30) is a ram (32) which surrounds the piston rod (17B) and the end face of which forms a stop (35).

5. Steering axle according to Claim 4, **characterized in that** the diameter of the ram (32) is small in comparison with the diameter of the inner wall (36, 37).

6. Steering axle according to one of the preceding claims, **characterized in that** the hydraulic cylinder (15) is provided with a step (38) or a shoulder on its inner wall (36, 37), with which step (38) or shoulder the stop element (30) comes into contact in its one end position.

7. Steering axle according to one of the preceding claims, **characterized in that**, on its side which faces away from the piston (16), the further piston (31) delimits a pressure space (A3) which can be connected to a hydraulic pressure source.

## Revendications

1. Essieu directeur avec des bras de direction montés en mouvement pivotant dans la région des deux extrémités d'un corps d'essieu (1) chacun avec un support de roue pour une roue de véhicule, avec une tringlerie de traction et de poussée (10) en une ou plusieurs parties reliant de façon articulée les bras de direction ainsi qu'avec un cylindre hydraulique (15) fixé au moins en direction longitudinale par rapport au corps d'essieu (1) pour l'actionnement de la tringlerie de traction et de poussée (10), qui est muni de raccords de pression pour l'alimentation en pression hydraulique à son corps de cylindre ainsi qu'à ses chapeaux d'extrémité (15A, 15B), dans lequel l'espace intérieur (20) du cylindre hydraulique (15) contient une partie longitudinale (11) de la tringlerie de traction et de poussée, qui se compose d'un piston (16) divisant l'espace intérieur (20) en deux chambres de pression (A1, A2) avec des tiges de piston (17A, 17B) sortant par les deux côtés du cylindre hydraulique (15), **caractérisé en ce que** le cylindre hydraulique (15) est muni au total de trois raccords de pression, dans lequel un premier raccord de pression (P1) conduit dans la première chambre de pression (A1) à travers un premier des chapeaux d'extrémité (15A), un deuxième raccord de pression (P2) conduit dans la deuxième chambre de pression (A2) et un troisième raccord de pression (P3) conduit à travers l'autre des chapeaux d'extrémité (15B) dans une troisième chambre de pression (A3), qui se trouve dans la partie de l'espace intérieur (20) la plus éloignée de la première chambre de pression (A1), et dans lequel un élément de butée (30) mobile longitudinalement entre deux positions finales est disposé dans l'espace intérieur (20), qui dans sa première position finale bloque la partie longitudinale (11) de la tringlerie de traction et de poussée (10) d'un côté dans une position dans laquelle la tringlerie de traction et de poussée (10) occupe une position médiane neutre, et **caractérisé en outre en ce que** l'élément de butée (30) dans son autre position finale s'appuie sur le chapeau d'extrémité (15B) du cylindre hydraulique (15), à travers lequel une des deux tiges de piston (17B) est menée, **en ce qu'**un composant de l'élément de butée (30) est un autre piston (31) mobile par rapport à la paroi intérieure (36) du cylindre hydraulique et la tige de piston (17B) menant à travers la chambre de pression et étanche par rapport à ces pièces (36, 17B), et **en ce que** la face hydrauliquement utile (F1) du piston (16) est plus petite que la face hydrauliquement utile (F2) de l'autre piston (31).

2. Essieu directeur selon la revendication 1, **caractérisé en ce que** l'élément de butée (30) est disposé de façon mobile longitudinalement dans l'espace intérieur (20) du cylindre hydraulique.

3. Essieu directeur selon la revendication 1, **caractérisé en ce que** la paroi intérieure (36, 37) du cylindre hydraulique (15) présente dans le plan du mouvement de l'autre piston (31) un plus grand diamètre que dans la région de mouvement du piston (16).

4. Essieu directeur selon l'une quelconque des revendications précédentes, **caractérisé en ce qu'**un composant de l'élément de butée (30) est un poinçon (32) entourant la tige de piston (17B), et dont la face frontale forme une butée (35).

5. Essieu directeur selon la revendication 4, **caractérisé en ce que** le diamètre du poinçon (32) est petit par comparaison avec le diamètre de la paroi intérieure (36, 37).

6. Essieu directeur selon l'une quelconque des revendications précédentes, **caractérisé en ce que** le cylindre hydraulique (15) est muni sur sa paroi intérieure (36, 37) d'un degré (38) ou d'un épaulement, sur lequel l'élément de butée (30) vient s'appliquer dans sa première position finale.

7. Essieu directeur selon l'une quelconque des revendications précédentes, **caractérisé en ce que** l'autre piston (31) limite sur son côté détourné du piston (16) une chambre de pression (A3), qui peut être reliée à une source de pression hydraulique.
